Europäisches Patentamt

European Patent Office

Office européen des brevets

(11) Publication number: **0 118 677**
**B1**

(12) **EUROPEAN PATENT SPECIFICATION**

(45) Date of publication of patent specification: **26.08.87**

(51) Int. Cl.⁴: **G 02 B 6/38**

(21) Application number: **84100506.9**

(22) Date of filing: **18.01.84**

(54) **Method of positioning light receiving end of light conductor at focal point of lens and apparatus therefor.**

(30) Priority: **20.01.83 JP 7604/83**

(43) Date of publication of application:
**19.09.84 Bulletin 84/38**

(45) Publication of the grant of the patent:
**26.08.87 Bulletin 87/35**

(84) Designated Contracting States:
**CH DE FR GB IT LI SE**

(56) References cited:
**US-A-4 290 667**

**PATENTS ABSTRACTS OF JAPAN, vol. 6, no. 248(P-160)(1126), 7th December 1982, page 88P160**

(73) Proprietor: **Mori, Kei**
**3-16-3-501, Kaminoge**
**Setagaya-ku Tokyo (JP)**

(72) Inventor: **Mori, Kei**
**3-16-3-501, Kaminoge**
**Setagaya-ku Tokyo (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath Maximilianstrasse 58 D-8000 München 22 (DE)**

Courier Press, Leamington Spa, England.

## Description

The present invention relates to a system for guiding light from a light source to a desired location for lighting and other applications and, more particularly, to a method applicable to such a system to ensure the positioning of a light receiving end of a light guide element at the focal point of a lens.

The applicant has proposed in various forms a solar collector which is constructed to converge and direct sunlight into a fiber optic cable by means of a lens or the like, so that the light may propagate through the cable to a desired location for lighting, for example. In the proposed system, the sunlight is converged mainly by Fresnel lenses each having a diameter of about 40 centimeters, and then introduced into fiber optic cables each having a diameter of about one centimeter. The light receiving end of each fiber optic cable is located at the focal point of its associated Fresnel lens. In this construction, the sunlight converged by the lenses propagates through the fiber optic cables to a desired station for an intended application.

The light receiving end of each of the above-mentioned fiber optic cables is adjustable in position in the vicinity of the focal point of the Fresnel lens associated therewith along the optical axis of the lens and in a plane perpendicular to the optical axis. This allows the light receiving end of the cable to register with the focal point of the lens.

The prior art solar collector uses a plurality of Fresnel lenses each having a diameter of about 40 centimeters. Typically, the number of lenses, is seven, nineteen or thirty-seven. Because the number of lenses is not so large, positioning the cables one by one at the focal points of the lenses is not objectionably time or labor consuming. However, a fiber optic cable is a bundle of numerous optical fibers which cannot be produced without there being spaces therebetween. The spaces between the optical fibers reduce the quantity of light allowed into the cable constituting a major cause of a decrease in the collection efficiency.

Another solar collector proposed by the applicant (JP—A—57—146205) has been developed to solve the problem discussed above by using a number of lenses, such as 2,000, dimensioned about 4 centimeters in diameter. Optical fibers, dimensioned about 1—0.2 mm in diameter, are located such that their light receiving ends are respectively held to register with the focal points of the lenses. Should the light receiving ends of the optical fibers be positioned at the focal points of the lenses in the same manner as in the case with the Fresnel lenses having a diameter of 40 centimeters, the apparatus would suffer from various drawbacks such as an intricate, bulky and heavy construction, an increase in costs, and troublesome work required for positioning and maintenance.

US—A—4,290,667 discloses a method of an apparatus for positioning a light guide end with respect to a lens which uses a laser light beam to help fix the end of the optical fiber at the focus of the lens. It is an object of the present invention to provide a method of accurately and efficiently positioning the light receiving end of an optical fiber at the focal point of a lens.

In one aspect of the present invention, there is provided a method of positioning a light receiving end of a light conducting element at a focal point of a lens, as disclosed in claim 1. Preferred embodiments of the invention are claimed in the depending claims.

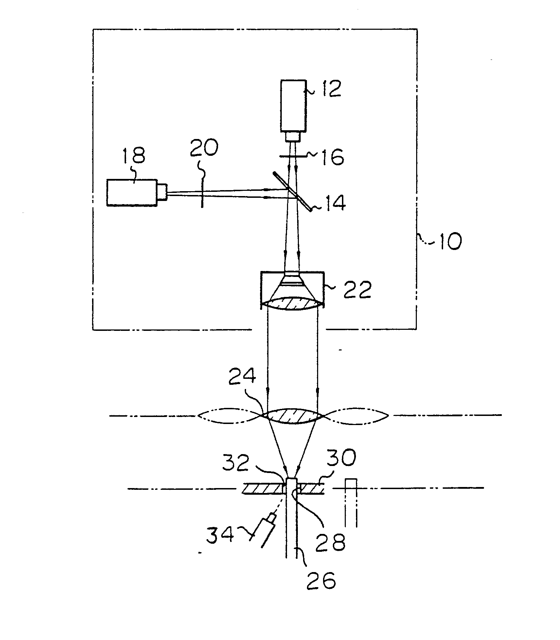

The above and other objects, features and advantages of the present invention will become apparent from the following detailed description taken with the accompanying drawing.

The single figure is a schematic view of a preferred embodiment of the present invention.

While the method of positioning the light receiving end of a light guide at the focal point of a lens and apparatus therefor of the present invention is susceptible of numerous physical embodiments, depending upon the environment and requirements of use, a substantial number of the herein shown and described embodiments have been made, tested and used, and all have performed in an eminently satisfactory manner.

Referring to the drawing, a positioning apparatus for carrying out the present invention is shown and generally designated by the reference numeral 10. The apparatus 10 includes a light source 12 for emitting a coherent colour beam such as a red beam. An example of such a light source is a helium-neon laser. The visible colour beam from the light source 12 is directed toward a half-mirror 14 while being selectively intercepted by a shutter 16. A second light source 18 emits a coherent light beam of another colour such as a blue beam and may comprise an argon laser, for example. The colour beam from the light source 18 is also directed toward the half-mirror 14 while being selectively intercepted by a shutter 20. The colour beam from the half-mirror 14 is directed on to an optical arrangement 22 which serves to transform the incident beam into a parallel beam.

Disposed below the optical arrangement 22 is a lens 24 for converging the parallel beam and having a diameter of about 4 centimeters. In practice, a number of such lenses are combined as indicated by phantom lines in the drawing. An optical fiber 26 is located below the lens 24 such that a light receiving end thereof is positioned at the focal point of the lens 24. Again, a number of such optical fibers are arranged in one-to-one correspondence with the lenses 24 as illustrated. The optical fiber 26 is received in an aperture 28 which is formed through a support plate 30 and positioned in register with the optical axis of the overlying lens 24. After the optical fiber 26 has been received in the aperture 28 of the support plate 30 and its light receiving end positioned at the focal point of the lens 24 as will be described, an adhesive 32 is injected from an injector 34 to rigidly connect the optical fiber 26 to the support plate 30.

The positioning procedure in accordance with the present invention will be described assuming that the optical fiber 26 is adapted to receive red and blue light beams selectively. When it is desired to introduce red light into the optical fiber 26, the shutter 20 is so positioned as to interrupt the blue beam from the light source 18, while the shutter 16 is actuated to allow the red beam from the light source 12 to reach the half mirror 14. The red light transmitted through the half-mirror 14 is transformed by the optical arrangement 22 into a parallel beam which is then transmitted through the lens 24. The optical path through which the light beam transmitted through the lens 24 propagates can be observed by the naked eye. Therefore, one is allowed to bring the light receiving end of the optical fiber 26 into register with the focal point of the lens 24 while observing it. This is followed by injecting the adhesive 28 from the injector 34 to securely connect the optical fiber 26 to the support plate 30.

Where the desired beam is the blue beam from the second light source 18, the shutter 20 will be opened and the shutter 16 closed. The subsequent procedure is common to the previously described one, that is, the light receiving end of the optical fiber 26 is positioned at the focal point of the lens 24 and then the optical fiber 26 is fixed to the support plate 30.

It will be understood that the apparatus 10 is capable of supplying both colours simultaneously by directing both the red beam from the light source 12 and the blue beam from the light source 18 to the lens 24.

In summary, it will be seen that the present invention provides a simple method which is capable of fixing a light receiving end of an optical fiber at the focal point of a lens.

Various modifications will be apparent to those skilled in the art after receiving the teachings of the present disclosure, that is, the above description and figures should not be construed as limiting the scope of the invention which is defined by the appended claims.

**Claims**

1. A method of fixing a light receiving end of a light guide element (26) at a focal point of a lens (24), comprising the steps of: directing coherent light onto and through the lens (24); moving the light receiving end of the light conducting element (26) so as to register with the focal point of the lens (24); and rigidly connecting the light guide element (26) to a lens support member (30) by means of an adhesive, characterized in that the step of directing coherent light includes using two distinct light beams of different colours.

2. A method as claimed in claim 1 wherein the coherent light used is produced by a red laser (12) and a blue laser (18).

3. A method as claimed in claim 1 wherein the coherent light used is produced by: a laser (12) for emitting a red beam; a laser (18) for emitting a blue beam; two shutters (16, 20) disposed in optical paths extending from the two lasers respectively; a half-mirror (14) for steering the red and blue laser beams to a common optical path leading to the optical arrangement (22); and an optical arrnagement (22) for transforming the colour laser beams into parallel beams; said parallel beams being supplied to the lens (24).

**Patentansprüche**

1. Verfahren zum Fixieren des Lichtempfangenden Endes eines Lichtleiterelements (26) im Fokus einer Linse (24), welches folgende Schritte aufweist: es wird kohärentes Licht auf die Linse gerichtet und durch die Linse (24) hindurch geschickt; das lichtempfangende Ende des lichtleitenden Elements (26) wird so bewegt, daß es im Fokus der Linse (24) zu liegen kommt; es wird dann das Lichtleiterelement (26) mit Hilfe von Klebstoff mit einem Linsenträgerelement (30) fest verbunden, dadurch gekennzeichnet, daß man den Schritt, in dem das kohärente Licht auf die Linse gerichtet wird, durchführt, indem man zwei verschiedene Lichtstrahlen unterschiedlicher Farben verwendet.

2. Verfahren nach Anspruch 1, wobei das verwendete kohärente Licht von einem roten Laser (12) und einem blauen Laser (18) erzeugt wird.

3. Verfahren nach Anspruch 1, wobei das verwendete kohärente Licht erzeugt wird durch: einen Laser (12), der einen roten Lichtstrahl emittiert; einen Laser (18), der einen blauen Lichtstrahl emittiert; zwei Verschlüsse (16, 20), die in den optischen Wegen angeordnet sind, die von den beiden Lasern jeweils ausgehen; einen Halbsiegel (14), der das rote und das blaue Laserlicht auf einen gemeinsamen optischen Weg zur optischen Anordnung (22) richtet und durch eine optische Anordnung (22), die die farbigen Laserstrahlen parallelisiert; wobei die parallelisierten Strahlen dann an die Linse (24) weitergegeben werden.

**Revendications**

1. Procédé pour fixer l'extrémité réceptrice de lumière d'un élément guide de lumière (26) au foyer d'une lentille (24), comprenant les opérations suivantes: diriger de la lumière cohérente sur et à travers la lentille (24); déplacer l'extrémité réceptrice de lumière de l'élément conducteur de lumière (26), de manière à la foire coïncider avec le foyer de la lentille (24); et relier l'élément guide de lumière (26) rigidement à une pièce support de lentille (30) au moyen d'une colle, caractérisé en ce que l'opération consistant à diriger la lumière cohérente utilise deux faisceaux lumineux distincts de différentes couleurs.

2. Procédé selon la revendication 1, dans lequel la lumière cohérente utilisée est produite par un laser rouge (12) et un laser bleu (18).

3. Procédé selon la revendication 1, dans lequel la lumière cohérente utilisée est produite par: un laser (12) destiné à émettre un faisceau rouge; un laser (18) destiné à émettre un faisceau bleu;

deux obturateurs (16, 20) disposés dans des trajects optiques s'étendant respectivement à partir des deux lasers; un miroir semi-transparent (14) pour diriger les faisceaux du laser rouge et du laser bleu sur un trajet optique commun menant vers un dispositif optique (22); et un dispositif optique (22) pour transformer les faisceaux des lasers de couleur en faisceaux parallèles, faisceaux parallèles qui sont envoyés à la lentille (24).